## Europäisches Patentamt

## European Patent Office

## Office européen des brevets

(19)

(11) Veröffentlichungsnummer: **0 124 104**
**B1**

(12) # EUROPÄISCHE PATENTSCHRIFT

(45) Veröffentlichungstag der Patentschrift:
**18.01.89**

(51) Int. Cl.⁴: **G 01 N 25/18**

(21) Anmeldenummer: **84104760.8**

(22) Anmeldetag: **27.04.84**

(54) Verfahren und Vorrichtung zur Bestimmung des Wärmeleitfähigkeitskoeffizienten und der Wärmekapazität von Stoffen.

(30) Priorität: **27.04.83 PL 241663**

(43) Veröffentlichungstag der Anmeldung:
**07.11.84 Patentblatt 84/45**

(45) Bekanntmachung des Hinweises auf die Patenterteilung:
**18.01.89 Patentblatt 89/3**

(84) Benannte Vertragsstaaten:
**CH DE FR GB IT LI**

(56) Entgegenhaltungen:
**DE-A- 1 573 300**
**DE-A- 2 513 342**
**DE-A- 2 939 053**
**FR-A- 2 245 247**
**US-A- 3 279 239**
**US-A- 3 733 887**

**REVIEW OF SCIENTIFIC INSTRUMENTS, Band 53, Nr. 6, Juni 1982, Seiten 876-879, New York, USA; A.E. ABEY et al.: "Apparatus for determining the thermal properties of large geologic samples at pressures to 0.2 GPa and temperatures to 750 K"**

(73) Patentinhaber: **POLSKA AKADEMIA NAUK CENTRUMBADAN MOLEKULARNYCH I MAKROMOLEKULARNYCH, ul. Boczna 5, 90-364 Lodz (PL)**

(72) Erfinder: **Piórkowska-Palczewska, Ewa, ul. Wojska Polskiego 98 m.26, Lodz (PL)**
Erfinder: **Galeski, Andrzej, ul.Grabieniec 18 m.7, Lódz (PL)**
Erfinder: **Kryszewski, Marian, Pl. Dabrowskiego 3 m.6, Lódz (PL)**

(74) Vertreter: **Ebbinghaus, Dieter et al, v. FÜNER, EBBINGHAUS, FINCK Patentanwälte European Patent Attorneys Mariahilfplatz 2 & 3, D-8000 München 90 (DE)**

(56) Entgegenhaltungen: (Fortsetzung)
**KOLLOID-ZEITSCHRIFT, Band 174, Heft 2, Seiten 134-142, DE; K. EIERMANN et al.: "Quasistationäre Messung der Wärmeleitfähigkeit von Kunststoffen im Temperaturbereich von -180 C bis +90 C"**

**Die Akte enthält technische Angaben, die nach dem Eingang der Anmeldung eingereicht wurden und die nicht in dieser Patentschrift enthalten sind.**

**Beschreibung**

Die Erfindung betrifft ein Verfahren zur Bestimmung thermischer Stoffwerte, insbesondere der Wärmeleitfähigkeit $\lambda$ von Materialproben, bei welchem die eine Fläche s der Materialprobe beheizt und der Wärmestrom Q durch die eine Dicke l aufweisende Materialprobe zur gegenüberliegenden Fläche senkrecht zur beheizten Fläche s gemessen wird sowie jeweils die Temperatur an der beheizten und an der gegenüberliegenden Fläche gemessen und die momentane Temperaturdifferenz $\Delta T$ bestimmt wird.

Die Erfindung betrifft weiterhin eine Vorrichtung zur Bestimmung thermischer Stoffwerte, insbesondere der Wärmeleitfähigkeit, die zwei Materialproben aufweist, zwischen denen ein mit Temperaturfühlern versehener Dünnschicht-Heizkörper angeordnet ist und die auf ihren den Dünnschicht-Heizkörpern gegenüberliegenden Flächen, an denen Temperaturfühler angeordnet sind, in thermischen Kontakt mit jeweils einem Wärmeableiter stehen.

Die Wärmeleitfähigkeit von Stoffen ist aus praktischen und theoretischen Gründen einer ihrer wichtigsten Parameter. Der Wärmetransport kontrolliert alle physikalischen, physikalisch-chemischen und chemischen Prozesse, bei denen Umwandlungs- oder Reaktionswärme abgegeben wird. Die Bestimmungsgleichung für die Wärmeleitfähigkeit $\lambda$ von Stoffen lautet:

$$\frac{dQ}{ds} = -\lambda \,\mathrm{grad}\, T \qquad (1)$$

darin sind Q der Wärmestrom, der pro Zeiteinheit durch die Fläche s geht und T die Temperatur.

Die folgende Gleichung bestimmt die räumlichen Veränderungen des Wärmestroms:

$$\mathrm{div}\frac{dQ}{ds} = -c_2\frac{\delta T}{\delta t} \qquad (2)$$

darin ist $c_2$ die Wärmekapazität des Stoffes pro Volumeneinheit unter den entsprechenden Bedingungen.

Die Gleichungen (1) und (2) bestimmen den Zustand des Stoffes vollständig, d.h. die Temperaturverteilung und die Wärmeströme an einer beliebigen Stelle des Stoffes. Eine Kombination der Gleichungen (1) und (2) ergibt die Gleichung für die Wärmeleitfähigkeit

$$\frac{\delta T}{\delta t} = \frac{\lambda}{c_2}\bar\nabla^2 T \qquad (3)$$

mit den Stoffwerten $c_2$ und $\lambda$. Das Messprinzip zur Ermittlung der Wärmeleitfähigkeit $\lambda$ beruht auf der Gleichung (1) unabhängig von der Zeit, d.h. im stationären Zustand.

Aus der US-A-3 733 887 ist eine Einrichtung zur Messung der Wärmeleitfähigkeit im stationären Zustand bekannt, bei der zwischen zwei Materialproben ein mit einer Temperaturstabilisierungsschaltung verbundenes Heizelement angeordnet ist. Die Proben sind mit entsprechenden Wärmeableitern verbunden.

Gemessen wird der Wärmestrom durch die Materialprobe bei kontrolliertem Temperaturunterschied oder der Temperaturunterschied, der einen bekannten Wärmestrom ermöglicht. Diese Messungen sind mit Fehlern behaftet, weil sich in den Materialproben in der Regel ein Transversalgradient der Temperatur einstellt und weil durch die Wärmeabfuhr ausserhalb der Prüfanordnung und durch Wärmeabstrahlung Wärmeverluste auftreten, die nicht erfassbar sind.

Zur Vermeidung dieser Fehler werden Materialproben in Form von Folien, deren Dicke im Vergleich zu ihren Transversalabmessungen gering ist, Nachwärmringe, die die Transversalgradienten der Temperatur auf ein möglichst gleiches Niveau bringen, sowie Vakuum zur Vermeidung von Wärmeströmungen verwendet. Zweckmässig sind auch symmetrische Prüfanordnungen mit zwei Wärmeabnehmern und zwei Materialproben, die auf beiden Seiten des flachen Heizkörpers angeordnet werden. Die Messung der Wärmeleitfähigkeit erfolgt innerhalb der Temperaturdifferenz auf beiden Seiten der Materialprobe. Da der Temperaturunterschied im allgemeinen einige Grad beträgt, lässt sich die Messtemperatur nicht genau bestimmen. Die Messung des Temperaturunterschiedes bei einem bestimmten Wärmestrom oder die Messung des Wärmestroms bei einem bestimmten Temperaturunterschied erfolgt, nachdem sich ein stationärer Wärmestrom eingestellt hat, was Minuten bei Stunden dauert. Es ist auch möglich, die Wärmeleitfähigkeit eines Stoffes durch Messung der Temperaturleitfähigkeit nach dem «Heissdrahtverfahren» bzw. «Blitzverfahren» (Sandberg, Anderson, Bäckström; J. Physics E. Sci. Instr. 10, 474 (1977), bzw. Chen, Poon, Choy; Polymer 18, 129 (1977); Chang, Bestul; J. Chem. Phys. 55, 503 (1972), Parker, Jenkins, Butler, Abbott; J. Appl. Phys. 32, 1679 (1961) zu bestimmen. Dabei wird die Zeit des Durchlaufs eines Wärmeimpulses durch eine vorgegebene Stoffschicht bestimmt. In allen Fällen ist der erhaltene Wert der Wärmeleitfähigkeit $\lambda$ einer bestimmten Temperatur des Temperaturbereiches zugeordnet, in dem die Messung durchgeführt wurde.

Bekannt ist ferner ein quasi-stationäres Verfahren zur Messung der Wärmeleitfähigkeit von Stoffen (Eiermann, Hollwega, Knappe, Kolloid Z. 174, 134 (1961)), bei dem die Summe der Temperaturunterschiede zwischen den Flächen zweier flacher Materialproben gemessen wird. Der Temperaturunterschied entsteht durch Wärmeableitung in eine kältere Metallplatte, die sich zwischen den Materialproben befindet. Nimmt man an, dass der Temperaturgradient innerhalb der Materialproben linear verläuft, so ist die Wärmeleitfähigkeit der Materialprobe in der Nähe der mittleren Temperatur der Materialproben durch folgende Gleichung gegeben:

$$\lambda = mc_1 \frac{l}{s} \frac{\frac{dT}{dt}}{\Delta T_1 + \Delta T_2} \qquad (4)$$

worin m die Masse der Metallplatte, $c_1$ ihre spezifische Wärme, l die Dicke der Materialprobe, $\Delta T_1$ und $\Delta T_2$ die Temperaturunterschiede an den Flächen der Materialprobe und $\frac{dT}{dt}$ die Änderung der Temperatur sind.

Bei diesem Verfahren wird der Transversalgradient der Temperatur durch einen oder mehrere Nachwärmeringe ausgeglichen. Ein Wärmeverlust nach aussen wird durch Vakuum und den Einsatz von zwei Proben, eine auf jeder Seite der Metallplatte ausgeglichen. Dieses Verfahren ist wegen der Annahme der Linearität und Konstanz des Temperaturgradienten innerhalb der Materialproben ungenau, weil diese Annahme im Falle einer kontinuierlichen Temperaturänderung der die Wärme ableitenden Platte und der Materialproben nicht zutrifft.

Aus der US-A-3 279 239 ist ferner ein Verfahren zur Ermittlung der Wärmeleitfähigkeit bei kontinuierlicher Temperaturänderung bekannt, bei welchem eine Materialprobe in Form einer Folie zwischen einer Wärmequelle, deren Temperatur kontinuierlich zeitabhängig geändert wird, und einem Wärmeableiter angeordnet wird. Dabei wird kontinuierlich die Temperaturdifferenz zwischen der Wärmequelle und dem Wärmeableiter gemessen. Die Wärmeleitfähigkeit $\lambda$ wird aus folgender Gleichung berechnet:

$$\lambda = \frac{Cm \cdot l}{s \cdot (T_1 - T_2)} \cdot \frac{dT}{dt} \qquad (4a)$$

wobei l die Dicke der Materialprobe, Cm die Wärmekapazität des Wärmeableiters, s die wärmeableitende Fläche des Wärmeableiters, dT/dt die Temperaturänderung der Wärmequelle und $T_1 - T_2$ die Temperaturdifferenz zwischen der Wärmequelle und dem Wärmeableiter sind. Der Einfluss der Wärmekapazität der Materialprobe auf die Grösse der Temperaturdifferenz zwischen der Wärmequelle und dem Wärmeableiter wird bei diesem Verfahren vernachlässigt. Dies ist nachteilig, weil unter dynamischen Bedingungen, d.h. bei kontinuierlicher Temperaturänderung der Wärmequelle, die Temperaturverteilung innerhalb der Materialprobe und somit die Temperaturdifferenz zwischen ihrer die Wärmequelle berührenden Fläche und ihrer den Wärmeableiter berührenden Fläche von der Temperaturleitfähigkeit der Materialprobe, d.h. dem Quotienten aus ihrer Wärmeleitfähigkeit und ihrer Wärmekapazität und nicht nur von der Wärmeleitfähigkeit allein abhängt. Deshalb sind die erhaltenen Werte für die Wärmeleitfähigkeit mit einem von der Temperaturänderungsgeschwindigkeit der Wärmequelle abhängigen Fehler belastet.

Die der Erfindung zugrunde liegende Aufgabe besteht nun darin, das Verfahren und die Vorrichtung der eingangs genannten Art so auszubilden, dass die gewünschten thermischen Stoffwerte möglichst ohne die Fehler der bekannten Messungen ermittelt werden können.

Diese Aufgabe wird ausgehend von dem Verfahren der eingangs genannten Art dadurch gelöst, dass die Temperatur an der der beheizten Fläche s gegenüberliegenden Fläche der Materialprobe zur Einstellung einer vorbestimmten konstanten Temperaturänderungsgeschwindigkeit b an dieser Fläche kontinuierlich geändert wird und dass der thermische Stoffwert, nämlich die Wärmeleitfähigkeit $\lambda$, die Wärmekapazität pro Volumeneinheit $c_2$ oder die Temperaturleitfähigkeit a = $\lambda/c_2$ mit Hilfe der Gleichung

$$\lambda = \frac{(2Q/s - b \cdot l \cdot c_2)l}{2\Delta T} \qquad (5)$$

berechnet wird.

Wenn die Messungen bei verschiedenen Temperaturänderungsgeschwinigkeiten b an der der beheizten Fläche s gegenüberliegenden Fläche der Materialprobe durchgeführt werden, lässt sich auf einfache die Wärmekapazität pro Volumeneinheit ermitteln. Die Wärmekapazität der Materialprobe ergibt sich dann aus dem Quotienten der Wärmekapazität pro Volumeneinheit und der Dichte der Materialprobe. Die Temperaturleitfähigkeit a lässt sich aus dem Quotienten aus Wärmeleitfähigkeit und Wärmekapazität pro Volumeneinheit errechnen.

Wenn die Temperatur an der der beheizten Fläche gegenüberliegenden Fläche der Materialprobe durch thermischen Kontakt mit einem Körper hoher Wärmeleitfähigkeit, mit einem Gasstrom oder mit einem Flüssigkeitsstrom geändert wird, lassen sich die Temperaturänderungsgeschwindigkeiten auf einfache Weise realisieren.

Die der Erfindung zugrunde liegende Aufgabe wird ausgehend von der Vorrichtung der eingangs genannten Art durch eine jedem Wärmeableiter zugeordnete Anordnung zum Einstellen einer vorbestimmten konstanten Temperaturänderungsgeschwindigkeit an der mit dem Wärmeableiter in Kontakt stehenden Fläche der Materialprobe gelöst.

Dabei ist zweckmässigerweise eine der Materialproben eine ständig mit dem Dünnschicht-Heizkörper verbundene Standardprobe, wobei die Messungen nur an der Materialprobe durchgeführt werden.

Mit dem erfindungsgemässen Verfahren und mit der erfindungsgemässen Vorrichtung lässt sich eine hohe Messgenauigkeit erreichen, wobei die Temperaturunterschiede an beiden Materialproben mit weniger als 1 °C sehr gering sind.

Der Dünnschicht-Heizkörper und die Wärmeableiter sind an eine Programmierschaltung angeschlossen, die eine lineare Temperaturänderung vorgibt.

Anhand von Zeichnungen wird die Erfindung näher erläutert. Es zeigt:

Fig. 1 schematisch eine Vorrichtung zur Bestimmung thermischer Stoffwerte, insbesondere der Wärmeleitfähigkeit von Materialproben, und

Fig. 2 ein Funktionsdiagramm für typische Polymerwerte.

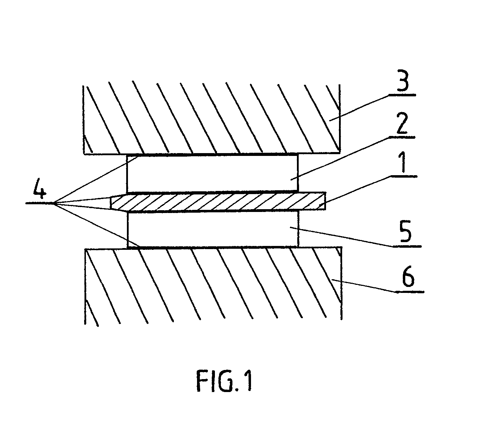

Die in Fig. 1 gezeigte Vorrichtung hat einen Dünnschicht-Heizkörper 1, auf dessen einer Seite eine Materialprobe 2 und auf dessen anderer Seite eine Materialprobe 5, die durch eine Standardprobe ersetzt sein kann, angeordnet sind. Die Materialproben 2 und 5 stehen mit dem Dünnschicht-Heizkörper 1 in einem innigen thermischen Kontakt. In dem Dünnschicht-Heizkörper 1 sind Temperaturfühler vorgesehen. Auf der dem Dünnschicht-Heizkörper gegenüberliegenden Seite steht die Materialprobe 2 mit einem Wärmeableiter 3 und die Materialprobe 5 mit einem Wärmeableiter 6 in innigem wärmeleitenden Kontakt. Der thermische Kontakt zwischen den Materialproben 2 und 5 und dem Dünnschicht-Heizkörper 1 sowie ihren zugeordneten Wärmeableitern 3 bzw. 6 kann durch geeignete Mittel, beispielsweise Suspensionen 4 aus Pulvern oder Metallflocken in Ölen und Schmierstoffen verbessert werden. Für die Messung der Temperatur an den Kontaktflächen der Materialproben 2 mit dem zugeordneten Wärmeableiter 3 bzw. 6 sind Temperaturfühler vorgesehen. Eine zeitlich linear veränderbare Temperatur an der der beheizten Fläche gegenüberliegenden Fläche jeder Materialprobe 2 bzw. 5 oder mit anderen Worten eine gewünschte konstante Temperaturänderungsgeschwindigkeit an dieser Fläche lässt sich beispielsweise durch Verdampfen flüssiger Luft durch einen Luftstrom oder mit Hilfe von Blöcken aus Kupfer oder Silber erreichen, in die Widerstandsthermometer für die Messung der Oberflächentemperatur an der Kontaktseite mit der Materialprobe 2 bzw. 5 eingesetzt sind. Der Dünnschicht-Heizkörper 1 kann eine Dikke von weniger als 1 mm haben, die Materialproben 2 bzw. 5 haben eine Dicke von beispielsweise 10 mm. Der Dünnschicht-Heizkörper 1 kann kreisförmig ausgebildet sein und beispielsweise einen Durchmesser von 12 mm haben, wobei dann ein Wärmeschutzring mit einem Durchmesser von 12,5 mm vorgesehen werden kann.

Wenn die Messungen mit der in Fig. 1 gezeigten Anordnung durchgeführt werden, ist die Temperatur in der Probe zeitlich und räumlich variabel (T=T (x,t)) und bildet eine partielle Differentialgleichung:

$$\nabla^2 T - \frac{c_2}{\lambda}\frac{\delta T}{\delta t} = \frac{A}{\lambda} \qquad (6)$$

Die Funktion A gleich A(x) beschreibt die Wärmeerzeugung durch das Heizelement und beträgt

$$A(x) = -\frac{P}{2s}\delta(x-1) \text{ für } 0 \leq x \leq 1$$

$$A(x) = \frac{P}{2s}\delta(x-1) \text{ für } 1 \leq x \leq 21 \qquad (7)$$

worin $\delta$ eine Dirac-Funktion, P die Leistung des Heizelements und s seine Fläche sind.

Für eine Anfangstemperatur $T_o = 0°$ hat die Gleichung (6) folgende Anfangs- und Randbedingungen:

$$
\begin{array}{lll}
T(x,0) & = ax & \text{für } 0 \leq x \leq 1 \\
T(x,0) & = a(21-x) & \text{für } 1 \leq x \leq 21 \\
T(0,t) & = bt & \\
T(21,t) & = bt & \\
T(0,0) & = 0 &
\end{array}
$$

worin $a = \dfrac{P}{2\lambda s}$ und b die Temperaturänderungsgeschwindigkeit sind.

Die Gleichung (6) kann durch Trennung der Variablen gelöst werden:

$$T(x,t) = U(x,t) + \omega(x,t)$$

Die Funktion U(x,t) bildet die Differentialgleichung der Form:

$$\nabla^2 U - \frac{c_2}{\lambda}\frac{\delta U}{\delta t} = \frac{1}{\lambda}A \qquad (9)$$

mit den Anfangs- und Randbedingungen:

$$
\begin{array}{lll}
U(x,0) & = ax & \text{für } 0 \leq x \leq 1 \\
U(x,0) & = a(21-x) & \text{für } 1 \leq x \leq 21 \\
U(0,t) & = 0 & \\
U(21,t) & = 0 &
\end{array}
$$

Die Funktion U(x,t) kann in zwei Teile aufgeteilt werden:

$$U(x,t) = U_1(x) + U_2(x,t) \qquad (10)$$

Die Funktion $U_1(x)$ bildet die Gleichung:

$$\nabla^2 U_1 = \frac{1}{\lambda}A \qquad (11)$$

mit den Randbedingungen

$$
\begin{array}{l}
U_1(0) = U_1(21) = 0 \\
U_1(1) = al
\end{array}
$$

Die Lösung der Gleichung (11) hat die Form:

$$
\begin{array}{lll}
U_1 & = ax & \text{für } 0 \leq x \leq 1 \\
U_1 & = a(21-x) & \text{für } 1 \leq x \leq 21
\end{array}
$$

Die Funktion $U_2(x,t)$ erfüllt folgende Gleichung:

$$\nabla^2 U_2 - \frac{c_2}{\lambda}\frac{\delta U_2}{\delta t} = 0$$

mit den Bedingungen

$$
\begin{array}{ll}
U_2(0,t) & = 0 \\
U_2(21,t) & = 0
\end{array}
$$

und ist eine Identitätsfunktion, die für alle Werte von x und t gleich 0 ist.

Die Funktion $\omega(x,t)$ ist die Lösung folgender Gleichung:

$$\nabla^2\omega - \frac{c_2}{\lambda}\frac{\delta\omega}{\delta t} = 0 \qquad (13)$$

mit den Bedingungen

$\omega(x,0) = 0$
$\omega(0,t) = bt$
$\omega(21,t) = bt$

Die Lösung der Gleichung (13) hat die Form

$\omega(x,t) = bt - bF(x,t)$ für $0 \leqq x \leqq 1$
sowie für $1 \leqq x \leqq 21$ $\qquad (14)$

Die Funktion $T(x,t)$ ist die Überlagerung der Funktionen $U_1$, $U_2$ und $\omega$:

$T(x,t) = ax + bt - bF(x,t)$ für $0 \leqq x \leqq 1$
$T(x,t) = a(21-x) + tb - bF(x,t)$ für $1 \leqq x \leqq 21$ $\qquad (15)$

worin

$$F(x,t) = \frac{161^2 c_2}{\pi^3 \lambda} \sum_{n=1}^{\omega} \frac{1}{(2n-1)^3} \sin\left[\frac{(2n-1)\pi x}{21}\right] \cdot$$

$$\cdot \left[1 - \exp\left(-\frac{\lambda(2n-1)^2\pi^2 t}{41^2 c_2}\right)\right] \qquad (15a)$$

Der Ausdruck $ax + tb$ beschreibt den linearen Temperaturgradienten in der Probe bei gleichmässig mit der Geschwindigkeit b wachsender Temperatur. Die Funktion $F(x,t)$ stellt die Verzögerung der Temperaturänderung gegenüber dem gleichmässigen Temperaturanstieg dar. Dies liegt an der volumenbezogenen Wärmekapazität der Materialprobe. Die Funktion $F(x,t)$ hat folgende Eigenschaften:

$$F(x,\infty) = \frac{161^2 c_2}{\pi^3 \lambda} \sum_{n=1}^{\infty} \frac{1}{(2n-1)^3} \sin\left[\frac{(2n-1)\pi x}{2l}\right] \quad (16a)$$

$$F(0,\infty) = F(2l,\infty) = 0 \qquad (16b)$$

$$F(1,\infty) = \frac{1^2 c_2}{2\lambda} \qquad (16c)$$

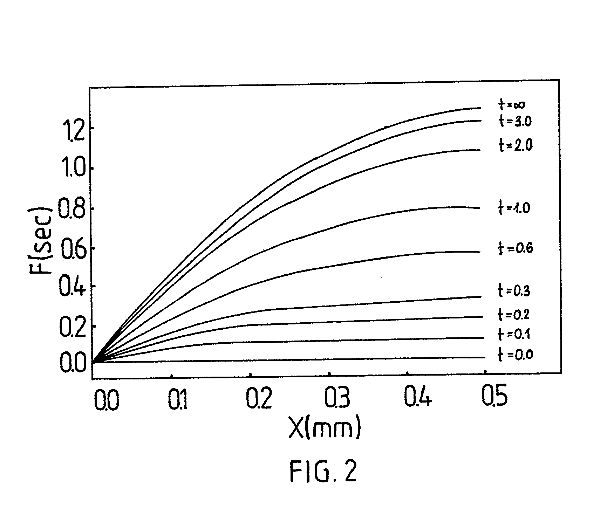

In Fig. 2 ist die Funktion $F(x,t)$ gegenüber dem Abstand für verschiedene Zeiten für typische Polymerwerte

$$\lambda = 0,2\frac{W}{m\ grd}, \ c_2 = 2\frac{J}{cm^3\ grd}$$

dargestellt, wobei die Dicke der Proben 0,5 mm beträgt.

Man erkennt, dass die Verzögerung nach einigen Sekunden ein Gleichgewicht erreicht und als konstant betrachtet werden kann. Die Verzögerung bewirkt eine Korrektur bei der Berechnung der Wärmeleitfähigkeit in Abhängigkeit von der Wärmekapazität. Für eine Temperaturänderungsgeschwindigkeit von weniger als 4 °C/min liegt die Korrektur unter 10%.

**Patentansprüche**

1. Verfahren zur Bestimmung thermischer Stoffwerte, insbesondere der Wärmeleitfähigkeit λ von Materialproben, bei welchem die eine Fläche s der Materialprobe beheizt und der Wärmestrom Q durch die eine Dicke l aufweisende Materialprobe zur gegenüberliegenden Fläche senkrecht zur beheizten Fläche s gemessen wird sowie jeweils die Temperatur an der beheizten und an der gegenüberliegenden Fläche gemessen und die momentane Temperaturdifferenz ΔT bestimmt wird, dadurch gekennzeichnet, dass die Temperatur an der der beheizten Fläche s gegenüberliegenden Fläche der Materialprobe zur Einstellung einer vorbestimmten konstanten Temperaturänderungsgeschwindigkeit b an dieser Fläche kontinuierlich geändert wird und dass der thermische Stoffwert, nämlich die Wärmeleitfähigkeit λ, die Wärmekapazität pro Volumeneinheit $c_2$ oder die Temperaturleitfähigkeit a $= \lambda/c_2$ mit Hilfe der Gleichung

$$\lambda = \frac{(2Q/s - b\cdot l\cdot c_2)l}{2\Delta T} \qquad (5)$$

berechnet wird.

2. Verfahren nach Anspruch 1, dadurch gekennzeichnet, dass die Messungen bei verschiedenen Temperaturänderungsgeschwindigkeiten b an der der beheizten Fläche s gegenüberliegenden Fläche der Materialprobe durchgeführt werden.

3. Verfahren nach Anspruch 1 oder 2, dadurch gekennzeichnet, dass die Temperatur an der der beheizten Fläche gegenüberliegenden Fläche der Materialprobe durch thermischen Kontakt mit einem Körper hoher Wärmeleitfähigkeit, mit einem Gasstrom oder mit einem Flüssigkeitsstrom zeitlich linear geändert wird.

4. Vorrichtung zur Bestimmung thermischer Stoffwerte, insbesondere der Wärmeleitfähigkeit λ, mit zwei Materialproben (2, 5), zwischen denen ein mit Temperaturfühlern versehener Dünnschicht-Heizkörper (1) angeordnet ist und die auf ihren dem Dünnschicht-Heizkörper (1) gegenüberliegenden Flächen, an denen Temperaturfühler angeordnet sind, in thermischem Kontakt mit jeweils einem Wärmeableiter (3, 6) stehen, gekennzeichnet durch eine jedem Wärmeableiter (3, 6) zugeordnete Anordnung zum Einstellen einer vorbestimmten konstanten Temperaturänderungsgeschwindigkeit an der mit dem Wärmeableiter (3, 6) in Kontakt stehenden Fläche der Materialprobe (2, 5).

5. Vorrichtung nach Anspruch 4, dadurch gekennzeichnet, dass eine der Materialproben (2, 5) eine ständig mit dem Dünnschicht-Heizkörper (1) verbundene Standardprobe ist.

## Claims

1. Method of determining thermal material parameters, especially the heat conductivity $\lambda$ of specimens, in which one surface s of the specimen is heated, and the heat flow Q through a specimen having a thickness l to the opposite surface is measured perpendicular to the heated surface s, and also the temperature at the heated and at the opposite surface is measured and the instantaneous temperature difference $\Delta T$ is determined, characterized in that the temperature at the surface of the specimen opposite the heated surface s is continuously varied in order to set a predetermined constant rate of temperature change b at this surface, and in that the thermal material parameter, namely the heat conductivity $\lambda$, the thermal capacity per unit of volume $c_2$ or the thermal conductivity $a = \lambda/c_2$ is calculated with the aid of the equation

$$\lambda = \frac{(2Q/s - b \cdot l \cdot c_2)l}{2\Delta T} \qquad (5)$$

2. Method according to Claim 1, characterized in that the measurements are carried out for different rates of temperature change b at the surface of the specimen opposite the heated surface s.

3. Method according to Claims 1 or 2, characterized in that the temperature at the surface of the specimen opposite the heated surface is varied linearly with time through thermal contact with a body of high heat conductivity, with a gas flow or with a liquid flow.

4. Apparatus for determining thermal material parameters, especially the heat conductivity, having two specimens (2, 5) between which is arranged a thin-film heating element (1) provided with temperature sensors and which, on the surfaces which are opposite the thin-film heating element (1) and at which temperature sensors are arranged, are in thermal contact with a heat dissipator (3, 6) in each case, characterized by an arrangement assigned to each dissipator (3, 6) for setting a predetermined constant rate of thermal change at the surface of the specimen (2, 5) in contact with the heat dissipator (3, 6).

5. Apparatus according to Claim 4, characterized in that one of the specimens (2, 5) is a standard specimen permanently connected to the thin-film heating element (1).

## Revendications

1. Procédé en vue de la détermination de valeurs thermiques d'un matériau, en particulier de la conductibilité thermique $\lambda$ d'échantillons de matériau, selon lequel une surface s de l'échantillon de matériau est chauffée et le flux de chaleur Q à travers l'échantillon de matériau présentant une épaisseur 1 en direction de la surface opposée est mesurée perpendiculairement à la surface chauffée s, la température sur la surface chauffée et sur la surface opposée étant également mesurée et la différence instantanée de température $\Delta T$ déterminée, caractérisé en ce que la température sur la surface de l'échantillon de matériau opposée à la surface chauffée s est modifiée continuement sur cette surface en vue de l'établissement d'une vitesse de variation de température constante prédéterminée b, et en ce que la valeur thermique du matériau, à savoir la conductibilité thermique $\lambda$, la capacité thermique par unité de volume $c_2$ ou la diffusivité thermique $a = \lambda/c_2$ est calculée à l'aide de l'équation

$$\lambda = \frac{(2Q/s - b \cdot l \cdot c_2)l}{2\Delta T} \qquad (5)$$

2. Procédé selon la revendication 1, caractérisé en ce que les mesures sont effectuées à différentes vitesses de variation de température b sur la surface de l'échantillon de matériau opposée à la surface chauffée s.

3. Procédé selon la revendication 1 ou 2, caractérisé en ce que la température sur la surface de l'échantillon de matériau opposée à la surface chauffée est modifiée linéairement temporellement par contact thermique avec un corps à conductibilité thermique élevée, avec un flux de gaz ou avec un flux de liquide.

4. Dispositif en vue de la détermination de valeurs thermiques d'un matériau, en particulier de la conductibilité thermique $\lambda$, avec deux échantillons de matériau (2, 5) entre lesquels est disposé un corps chauffant (1) en couche mince muni de capteurs de température et qui, sur leurs surfaces opposées au corps chauffant en couche mince (1), sur lesquelles sont disposés les capteurs de température, sont en contact thermique chacune avec un radiateur thermique (3, 6), caractérisé par un dispositif associé à chaque radiateur thermique (3, 6) en vue de l'établissement d'une vitesse de variation de température constante prédéterminée sur la surface de l'échantillon de matériau (2, 5) se trouvant en contact avec le radiateur thermique (3, 6).

5. Dispositif selon la revendication 4, caractérisé en ce qu'un des échantillons de matériau (2, 5) est un échantillon de référence relié en permanence au corps chauffant en couche mince (1).

FIG.1

FIG. 2